# EUROPEAN PATENT APPLICATION

(11) **EP 4 787 959 A1**
(43) Date of publication of application: **05.08.2026**
(21) Application number: 23953860.6
(22) Date of filing: 29.09.2023
(51) Int. Cl.: H04W 36/00

(54) **WIRELESS COMMUNICATION METHOD FOR SATELLITE HANDOVER OPERATION, USER DEVICE, BASE STATION, AND FIRST SATELLITE**

(71) Applicant: Shenzhen TCL New Technology Co., Ltd, Shenzhen, Guangdong 518052 (CN)
(72) Inventor: ZHANG, Xin, Shenzhen, Guangdong 518052 (CN)
(74) Representative: Herrero & Asociados, S.L.
(86) International application number: PCT/CN2023/123046
(87) International publication number: WO 2025/065719

(57) **Abstract**

A wireless communication method for a satellite handover operation includes receiving, by a user equipment, in a first cell and at a first time, information transmitted by a first satellite, wherein the first cell is a cell in an area covered by the first satellite when the first satellite is connected to a base station, the first cell comprises a physical cell address, and the first time is a period during which the user equipment is connected to the first satellite, based on the information, synchronizing, by the user equipment, with a second satellite in the first cell and at a second time, wherein the first cell is also a cell in an area covered by the second satellite when the second satellite is connected to the base station.

## Description

### BACKGROUND OF DISCLOSURE

### 1. Field of the Disclosure

The embodiments of the present application relate to the field of mobile communication technologies, and more particularly to a wireless communication method for a satellite handover operation, user equipment, a base station, and a first satellite.

### 2. Description of the Related Art

In the prior art, it is recognized that when a satellite changes, the corresponding cell also changes. Therefore, if a satellite serving a user equipment (UE) changes, a handover (HO) process will occur for the UE. The HO process is time-consuming and signaling-intensive. Accordingly, there is a need to provide a wireless communication method for a satellite handover operation, user equipment, a base station, and a first satellite, in order to address the problems of the prior art and other related issues.

### SUMMARY

The embodiments of the present application provide a wireless communication method for a satellite handover operation, user equipment, a base station, and a first satellite.

A wireless communication method for a satellite handover operation provided in the embodiments of the present application includes:
receiving, by a user equipment, in a first cell and at a first time, information transmitted by a first satellite, wherein the first cell is a cell in an area covered by the first satellite when the first satellite is connected to a base station, the first cell comprises a physical cell address, and the first time is a period during which the user equipment is connected to the first satellite.
based on the information, synchronizing, by the user equipment, with a second satellite in the first cell and at a second time, wherein the first cell is also a cell in an area covered by the second satellite when the second satellite is connected to the base station.

In some embodiments of the present application, the information notifies the user equipment that, during a process in which the user equipment switches from being connected to the first satellite to being connected to the second satellite, the physical cell address is maintained.

In some embodiments of the present application, synchronizing, by the user equipment, with the second satellite at the second time comprises: starting, by the user equipment, to synchronize with the second satellite immediately after receiving the information from the first satellite.

In some embodiments of the present application, synchronizing, by the user equipment, with the second satellite at the second time comprises: starting, by the user equipment, a timer, and upon expiration of the timer, the user equipment begins to synchronize with the second satellite.

In some embodiments of the present application, synchronizing, by the user equipment, with the second satellite at the second time comprises: starting, by the user equipment, the timer after completing downlink synchronization or uplink synchronization with the first satellite, and upon expiration of the timer, the user equipment begins to synchronize with the second satellite.

In some embodiments of the present application, the user equipment starts the timer after completing a first downlink synchronization or a first uplink synchronization with the first satellite, and the timer is not reset or restarted before the timer expires; upon expiration of the timer, the user equipment begins to perform synchronization with the second satellite, and the timer is reset or restarted.

In some embodiments of the present application, the user equipment starts the timer after completing a first downlink synchronization or a first uplink synchronization with the first satellite, and before the timer expires, the timer is allowed to be reset or restarted, and upon being reset or restarted, the timer restarts timing; upon expiration of the timer, the user equipment begins to perform synchronization with the second satellite, trigger for resetting or restarting is related to uplink or downlink synchronization.

In some embodiments of the present application, the timer is a timer used for a scenario in which the physical cell address is maintained.

In some embodiments of the present application, the second time is a time obtained by subtracting an offset time or a start time point from a service time (t-service), and the user equipment receives the offset time or the start time point transmitted by the first satellite, and the user equipment begins to synchronize with the second satellite at time of the t-service minus the offset time or the start time point, wherein the t-service indicates a time information of when the first cell stops providing service to a currently covered area.

In some embodiments of the present application, the information notifies the user equipment whether to use the maintained physical cell address and/or notifies the user equipment to perform soft satellite handover or hard satellite handover, wherein the soft satellite handover refers to a handover in which the first satellite and the second satellite simultaneously serve the first cell for a period of time, and the first satellite stops serving the first cell after the user equipment is connected to the second satellite; and the hard satellite handover refers to a handover in which the second satellite starts serving the first cell after the first satellite has completely stopped serving the first cell.

In some embodiments of the present application, the method further comprises acquiring, by the user equipment, an ephemeris and/or a common timing advance parameter of the second satellite.

In some embodiments of the present application, the method further comprises in a soft satellite handover scenario, distinguishing, by the user equipment, between the first satellite and the second satellite.

In some embodiments of the present application, the method further comprises predefining multiple sets of transmission positions for synchronization signal block patterns, wherein in the soft satellite handover scenario, the user equipment distinguishes between the first satellite and the second satellite based on transmission of synchronization signal blocks at different positions by the first satellite and the second satellite.

In some embodiments of the present application, in the soft satellite handover scenario, the user equipment distinguishes between the first satellite and the second satellite based on the transmission of the synchronization signal blocks at different positions by the first satellite and the second satellite, comprising:
during initial access, detecting, by the user equipment, positions of multiple sets of synchronization signal block patterns to access the first cell, wherein when the first satellite serves the first cell, one set of the synchronization signal block patterns is used.
in a scenario where the physical cell address is maintained, when the second satellite serves the first cell, the first satellite uses another set of the synchronization signal block patterns and transmits an indication information to the user equipment.
after receiving the indication information, the user equipment, when performing downlink synchronization with the second satellite, uses the other set of the synchronization signal block patterns based on the indication information.

In some embodiments of the present application, a usage order of the multiple sets of the synchronization signal block patterns is based on a default order, or is preconfigured, or configured by the base station for the user equipment.

In some embodiments of the present application, the user equipment receives the information, the timer configured by the first satellite, the second time configured by the first satellite, or the usage order of the multiple sets of synchronization signal block patterns via a dedicated message, a broadcast message, or a paging message.

In some embodiments of the present application, the user equipment acquires an ephemeris and/or a common timing advance parameter of the second satellite via the broadcast message.

In some embodiments of the present application, the broadcast information comprises a system information.

In some embodiments of the present application, the system information comprises an ephemeris and/or a common timing advance parameter for one or more upcoming satellites.

In some embodiments of the present application, the system information comprises system information block type 19 (SIB19).

In some embodiments of the present application, the dedicated message comprises a radio resource control (RRC) reconfiguration information, an RRC message, a medium access control (MAC) control element (CE) message, or a physical downlink control channel (PDCCH) command.

A wireless communication method for a satellite handover operation provided in the embodiments of the present application includes:
transmitting, by a base station, an information to a user equipment via a first satellite in a first cell and at a first time, wherein the first cell is a cell in an area covered by the first satellite when the first satellite is connected to the base station, the first cell comprises a physical cell address, and the first time is a period during which the user equipment is connected to the first satellite.
receiving, by the base station, a synchronization information, wherein the synchronization information notifies the base station that the user equipment, based on the information, synchronizes with a second satellite in the first cell and at a second time, the first cell is also a cell in an area covered by the second satellite when the second satellite is connected to the base station.

In some embodiments of the present application, the method further comprises predefining multiple sets of transmission positions for synchronization signal block patterns.

In some embodiments of the present application, the method further comprises receiving, by the base station, a notification from the user equipment that, in a soft satellite handover scenario, the user equipment distinguishes between the first satellite and the second satellite based on transmission of synchronization signal blocks at different positions by the first satellite and the second satellite.

In some embodiments of the present application, a usage order of the multiple sets of synchronization signal block patterns is based on a default order, or is preconfigured, or configured by the base station for the user equipment.

A wireless communication method for a satellite handover operation provided in the embodiments of the present application includes:
transmitting, by a first satellite, an information to a user equipment in a first cell and at a first time, wherein the first cell is a cell in an area covered by the first satellite when the first satellite is connected to a base station, the first cell comprises a physical cell address, and the first time is a period during which the user equipment is connected to the first satellite; wherein the information is used to enable the user equipment, based on the information, to synchronize with a second satellite in the first cell and at a second time, the first cell is also a cell in an area covered by the second satellite when the second satellite is connected to the base station.

The user equipment provided in the embodiments of the present application comprises a processor and a memory. The memory is configured to store a computer program, and the processor is configured to invoke and run the computer program stored in the memory to perform the above-described wireless communication method for a satellite handover operation.

The base station provided in the embodiments of the present application comprises a processor and a memory. The memory is configured to store a computer program, and the processor is configured to invoke and run the computer program stored in the memory to perform the above-described wireless communication method for a satellite handover operation.

The first satellite provided in the embodiments of the present application comprises a processor and a memory. The memory is configured to store a computer program, and the processor is configured to invoke and run the computer program stored in the memory to perform the above-described wireless communication method for a satellite handover operation.

A chip provided in the embodiments of the present application is configured to implement the above-described wireless communication method for a satellite handover operation.

Specifically, the chip comprises a processor configured to invoke and run a computer program from a memory, such that a device equipped with the chip performs the above-described wireless communication method for a satellite handover operation.

A computer-readable storage medium provided in the embodiments of the present application is configured to store a computer program, wherein the computer program enables a computer to perform the above-described wireless communication method for a satellite handover operation.

A computer program product provided in the embodiments of the present application comprises computer program instructions, wherein the computer program instructions enable a computer to perform the above-described wireless communication method for a satellite handover operation.

A computer program provided in the embodiments of the present application, when executed on a computer, enables the computer to perform the above-described wireless communication method for a satellite handover operation.

Through the above technical solution, the user equipment receives information transmitted by the first satellite in a first cell and at a first time, wherein the first cell is a cell in an area covered by the first satellite when the first satellite is connected to a base station, the first cell comprising a physical cell address, and the first time being a period during which the user equipment is connected to the first satellite. The user equipment, based on the information, synchronizes with a second satellite in the first cell and at a second time, wherein the first cell is also a cell in an area covered by the second satellite when the second satellite is connected to the base station. In this way, the satellite handover can be achieved without causing a change in the physical cell address, that is, the physical cell address is maintained, eliminating the need for a handover (HO) process. As a result, time and signaling are saved, and communication efficiency is improved.

### BRIEF DESCRIPTION OF DRAWINGS

The accompanying drawings described herein are provided to further illustrate the present application and constitute a part of the present application. The exemplary embodiments and descriptions of the present application are intended to explain, but not to unduly limit, the present application. In the drawings:
FIG. 1 is a schematic diagram of a communication system architecture provided in an embodiment of the present application.
FIG. 2 is another schematic diagram of a communication system architecture provided in an embodiment of the present application.
FIG. 3 is a flowchart illustrating a wireless communication method for satellite handover operation provided in an embodiment of the present application.
FIG. 4 is a flowchart illustrating another wireless communication method for satellite handover operation provided in an embodiment of the present application.
FIG. 5 is a flowchart illustrating another wireless communication method for satellite handover operation provided in an embodiment of the present application.
FIG. 6 is a flowchart illustrating another wireless communication method for satellite handover operation provided in an embodiment of the present application.
FIG. 7 is a flowchart illustrating another wireless communication method for satellite handover operation provided in an embodiment of the present application.
FIG. 8 is a flowchart illustrating another wireless communication method for satellite handover operation provided in an embodiment of the present application.
FIG. 9 is a flowchart illustrating another wireless communication method for satellite handover operation provided in an embodiment of the present application.
FIG. 10 is a schematic structural diagram of a communication device provided in an embodiment of the present application.
FIG. 11 is a schematic structural diagram of a chip provided in an embodiment of the present application.
FIG. 12 is a schematic block diagram of a communication system provided in an embodiment of the present application.

### DETAILED DESCRIPTION OF EMBODIMENTS

Embodiments of the present disclosure are described in detail with the technical matters, structural features, achieved objects, and effects with reference to the accompanying drawings as follows. Specifically, the terminologies in the embodiments of the present disclosure are merely for describing the purpose of the certain embodiment, but not to limit the disclosure.

The technical solutions of the embodiments of the present application can be applied to various communication systems, such as: long term evolution (LTE) systems, LTE frequency division duplex (FDD) systems, LTE time division duplex (TDD) systems, 5G communication systems, or future communication systems.

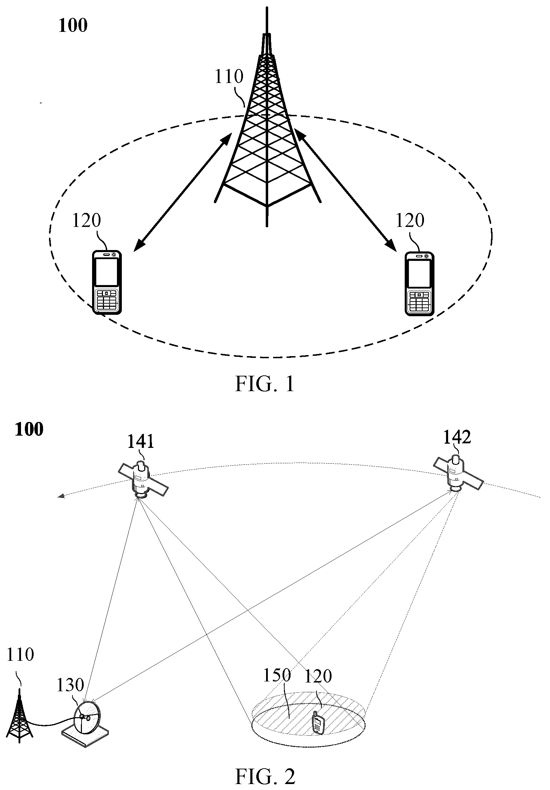

Exemplarily, a communication system 100 to which the embodiment of the present application is applied is shown in FIG. 1. The communication system 100 may include a base station 110, which can be a device that communicates with user equipment (UE) 120. The base station 110 may provide communication coverage for a specific geographic area and may communicate with user equipment located within that coverage area. Optionally, the base station 110 may be an evolved Node B (eNB or eNodeB) in an LTE system, or it may be a mobile switching center, relay station, access point, vehicle-mounted device, wearable device, hub, switch, bridge, router, a network-side device in a 5G network, or a base station in a future communication system.

The communication system 100 further includes at least one user equipment 120 located within the coverage area of the base station 110. As used herein, the term "user equipment" includes, but is not limited to, devices connected via wired lines, such as through Public Switched Telephone Networks (PSTN), Digital Subscriber Line (DSL), digital cable, or direct cable connections; and/or other data connections/networks; and/or via wireless interfaces, such as cellular networks, Wireless Local Area Networks (WLAN), digital television networks like DVB-H, satellite networks, AM/FM radio transmitters; and/or devices configured to receive/transmit communication signals from/to another user equipment; and/or Internet of Things (IoT) devices. User equipment configured to communicate via a wireless interface may be referred to as a "wireless communication terminal," "wireless terminal," or "mobile terminal." Examples of mobile terminals include, but are not limited to, satellite or cellular phones; Personal Communications System (PCS) terminals that combine cellular radio telephony with data processing, fax, and data communication capabilities; Personal Digital Assistants (PDAs) that may include radio telephones, pagers, Internet/intranet access, web browsers, notepads, calendars, and/or Global Positioning System (GPS) receivers; and conventional laptop and/or handheld receivers or other electronic devices that include a radio telephone transceiver. User equipment may refer to an access terminal, user unit, user station, mobile station, mobile terminal, remote station, remote user equipment, mobile device, wireless communication device, or user agent. An access terminal may be a cellular phone, cordless phone, Session Initiation Protocol (SIP) phone, Wireless Local Loop (WLL) station, PDA, handheld device with wireless communication capabilities, computing device, or another processing device connected to a wireless modem, vehicle-mounted device, wearable device, user equipment in a 5G network, or user equipment in an evolved Public Land Mobile Network (PLMN) of future communication systems.

Optionally, user equipment 120 may perform Device-to-Device (D2D) communication with each other.

Optionally, a 5G communication system or 5G network may also be referred to as a New Radio (NR) system or NR network.

FIG. 1 exemplarily illustrates one base station 110 and two user equipment 120. Optionally, the communication system 100 may include multiple base stations, and each base station may serve any number of user equipment within its coverage area. The embodiments of the present application are not limited in this regard.

Optionally, the communication system 100 may further include other network entities such as a network controller, a mobility management entity, and the like. The embodiments of the present application are not limited in this respect.

It should be understood that in the embodiments of the present application, devices in the network/system that have communication capabilities may be referred to as communication devices. Taking the communication system 100 shown in FIG. 1 as an example, the communication devices may include the base station 110 and the user equipment 120, both of which have communication functions. The base station 110 and user equipment 120 may be the specific devices described above and will not be elaborated here. The communication devices may also include other devices in the communication system 100, such as network controllers, mobility management entities, and other network entities. The embodiments of the present application are not limited in this regard.

Exemplarily, a communication system 100 to which the embodiments of the present application are applied is shown in FIG. 2. The communication system 100 may include a base station 110, user equipment 120, a gateway 130, a first satellite 141, and a second satellite 142. A single base station 110 (e.g., a gNB) may serve the same coverage area by connecting to different satellites (e.g., the first satellite 141 and the second satellite 142), as illustrated in FIG. 2. If the base station 110 (e.g., gNB) remains unchanged and the frequency of the synchronization signal block (SSB) remains the same, then in a Quasi-Earth Fixed Cell (QEFC) scenario, satellite handover may not lead to a change in the physical cell address. That is, the physical cell address remains the same, and no handover (HO) process is required. A Quasi-Earth Fixed Cell refers to a service cell whose coverage area on the ground remains fixed. For example, different satellites (e.g., the first satellite 141 and the second satellite 142) can cover the same area on the ground by adjusting their antenna pointing angles. When one satellite (e.g., the first satellite 141) is unable to cover the area, another satellite (e.g., the second satellite 142) can take over the coverage. For satellites located in geosynchronous orbit (GSO), the projected cells on the ground can also be fixed cells.

It should be understood that the terms "system" and "network" are often used interchangeably in this document. The term "and/or" is used solely to describe the relationship between associated elements and indicates three possible scenarios-for example, "A and/or B" may refer to: A alone, both A and B together, or B alone. In addition, the character "/" generally indicates an "or" relationship between the associated elements.

To facilitate understanding of the technical solutions of the embodiments of the present application, the relevant technical solutions are described below.

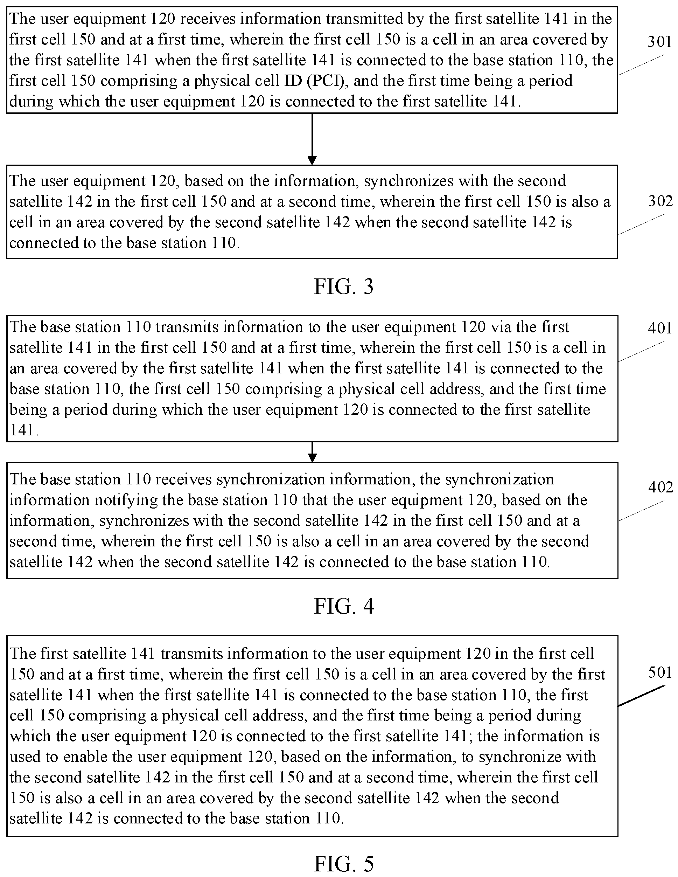

FIG. 3 is a flowchart illustrating a wireless communication method for satellite handover operation provided in an embodiment of the present application. As shown in FIG. 3, the wireless communication method for satellite handover operation includes the following steps:
Step 301: The user equipment 120 receives information transmitted by the first satellite 141 in the first cell 150 and at a first time, wherein the first cell 150 is a cell in an area covered by the first satellite 141 when the first satellite 141 is connected to the base station 110, the first cell 150 comprising a physical cell ID (PCI), and the first time being a period during which the user equipment 120 is connected to the first satellite 141.
Step 302: The user equipment 120, based on the information, synchronizes with the second satellite 142 in the first cell 150 and at a second time, wherein the first cell 150 is also a cell in an area covered by the second satellite 142 when the second satellite 142 is connected to the base station 110.

Specifically, in some examples, the purpose of the information is to notify the user equipment 120 to execute related mechanisms and procedures, such as performing synchronization with the second satellite 142 at a specified time. The first cell 150 is also a cell in an area covered by the second satellite 142 when the second satellite 142 is connected to the base station 110. In this way, satellite handover does not result in a change of the physical cell address, that is, the physical cell address is maintained, eliminating the need for a handover (HO) process. This saves time and signaling overhead, thereby improving communication efficiency.

In some embodiments of the present application, the information notifies the user equipment 120 that, during the process of switching from being connected to the first satellite 141 to being connected to the second satellite 142, the physical cell address is maintained.

Specifically, in some examples, the information informs the user equipment 120 that it is currently operating in a physical cell address maintenance mode, and that the user equipment 120 needs to execute the corresponding mechanisms and procedures, such as performing synchronization with an upcoming satellite (e.g., the second satellite 142) at a specified time. This solution is applicable to scenarios involving soft satellite handover or hard satellite handover where the gap is zero or negligible. In a soft satellite handover, the first satellite 141 and the second satellite 142 simultaneously serve the first cell 150 for a period of time. The first satellite 141 stops serving the first cell 150 only after the user equipment 120 has connected to the second satellite 142. In contrast, a hard satellite handover refers to the scenario in which the second satellite 142 starts serving the first cell 150 only after the first satellite 141 has completely stopped serving the first cell 150.

In some examples, the second time may also refer to the time at which the user equipment 120 receives the information from the first satellite 141. Specifically, the user equipment 120 begins to synchronize with the second satellite 142 immediately after receiving the information from the first satellite 141.

In some examples, the second time may also refer to the time when a timer expires. In certain examples, the timer is a timer configured for scenarios in which the physical cell address is maintained. Specifically, in some examples, the user equipment 120 starts a timer, and upon the expiration of the timer, the user equipment 120 begins to synchronize with the second satellite 142. More specifically, in some examples, the user equipment 120 starts the timer after completing downlink synchronization or uplink synchronization with the first satellite 141, and begins synchronization with the second satellite 142 after the timer expires. In certain examples, the user equipment 120 starts the timer after completing a first downlink synchronization or a first uplink synchronization with the first satellite 141. Before the timer expires, it is not reset or restarted; upon expiration of the timer, the user equipment 120 begins to perform synchronization with the second satellite 142, and the timer is reset or restarted. The trigger for the reset/restart is related to uplink or downlink synchronization. Specifically, in some examples, the user equipment 120 starts the timer after completing the first downlink or uplink synchronization with the first satellite 141. Before the timer expires, it is allowed to be reset or restarted. After being reset or restarted, the timer restarts counting; upon expiration, the user equipment 120 begins to perform synchronization with the second satellite 142. The trigger for the reset/restart is related to uplink or downlink synchronization.

FIG. 4 is a flowchart illustrating a wireless communication method for satellite handover operation provided in an embodiment of the present application. As shown in FIG. 4, the wireless communication method for satellite handover operation includes the following steps:
Step 401: The base station 110 transmits information to the user equipment 120 via the first satellite 141 in the first cell 150 and at a first time, wherein the first cell 150 is a cell in an area covered by the first satellite 141 when the first satellite 141 is connected to the base station 110, the first cell 150 comprising a physical cell address, and the first time being a period during which the user equipment 120 is connected to the first satellite 141.
Step 402: The base station 110 receives synchronization information, the synchronization information notifying the base station 110 that the user equipment 120, based on the information, synchronizes with the second satellite 142 in the first cell 150 and at a second time, wherein the first cell 150 is also a cell in an area covered by the second satellite 142 when the second satellite 142 is connected to the base station 110.

Specifically, in some examples, the purpose of the information is to notify the user equipment 120 to execute the relevant mechanisms and procedures, such as performing synchronization with the second satellite 142 at a specified time. The base station 110 becomes aware, through the synchronization information, that the user equipment 120 has synchronized with the second satellite 142 in the first cell 150 and at the second time based on the received information. The first cell 150 is also a cell in an area covered by the second satellite 142 when the second satellite 142 is connected to the base station 110. In this way, the satellite handover does not result in a change in the physical cell address, that is, the physical cell address is maintained, eliminating the need for a handover (HO) process. This saves time and signaling resources and improves communication efficiency.

FIG. 5 is a flowchart illustrating a wireless communication method for satellite handover operation provided in an embodiment of the present application. As shown in FIG. 5, the wireless communication method for satellite handover operation includes the following steps:
Step 501: The first satellite 141 transmits information to the user equipment 120 in the first cell 150 and at a first time, wherein the first cell 150 is a cell in an area covered by the first satellite 141 when the first satellite 141 is connected to the base station 110, the first cell 150 comprising a physical cell address, and the first time being a period during which the user equipment 120 is connected to the first satellite 141; the information is used to enable the user equipment 120, based on the information, to synchronize with the second satellite 142 in the first cell 150 and at a second time, wherein the first cell 150 is also a cell in an area covered by the second satellite 142 when the second satellite 142 is connected to the base station 110.

Specifically, in some examples, the first satellite 141, through the information, informs the user equipment 120 that it needs to execute the corresponding mechanisms and procedures, such as performing synchronization with the second satellite 142 at a specified time. For example, the user equipment 120 synchronizes with the second satellite 142 in the first cell 150 and at the second time based on the information. The first cell 150 is also a cell in an area covered by the second satellite 142 when the second satellite 142 is connected to the base station 110. In this way, satellite handover does not result in a change of the physical cell address, that is, the physical cell address is maintained, eliminating the need for a handover (HO) process. This saves time and signaling resources and improves communication efficiency.

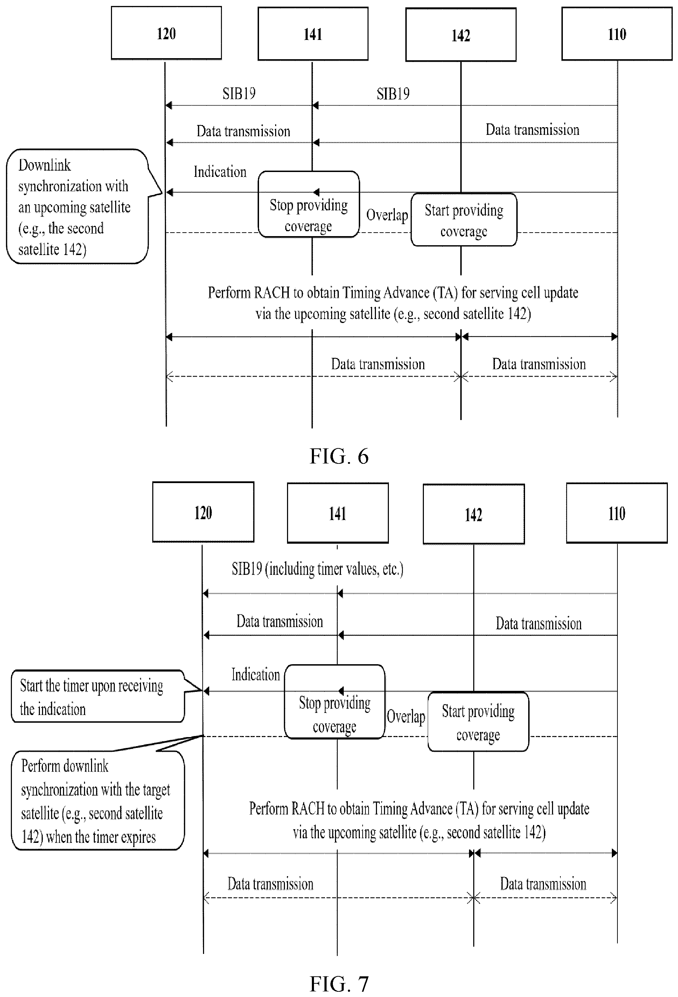

In some examples, the solution shown in FIG. 6 is applicable to scenarios involving soft satellite handover or hard satellite handover where the gap is zero or negligible. In a soft satellite handover, the first satellite 141 and the second satellite 142 simultaneously serve the first cell 150 for a period of time, and the first satellite 141 stops serving the first cell 150 only after the user equipment 120 has connected to the second satellite 142. In a hard satellite handover, the second satellite 142 begins to serve the first cell 150 only after the first satellite 141 has completely stopped serving the first cell 150.

FIG. 6 illustrates the procedure in a soft satellite handover scenario: the user equipment 120 immediately begins to synchronize with the upcoming satellite (e.g., the second satellite 142) after receiving the information (indication) from the first satellite 141.

Specifically, in some examples, the purpose of the information (indication) is to inform the user equipment 120 that it needs to execute the relevant mechanisms and procedures, such as performing synchronization with the second satellite 142 at a specified time. The first cell 150 is also a cell in an area covered by the second satellite 142 when the second satellite 142 is connected to the base station 110. In this way, the satellite handover does not result in a change of the physical cell address, that is, the physical cell address is maintained, eliminating the need for a handover (HO) process. This saves time and signaling resources and improves communication efficiency.

In some embodiments of the present application, the information notifies the user equipment 120 that, during the process of switching from being connected to the first satellite 141 to being connected to the second satellite 142, the physical cell address is maintained. Specifically, in some examples, the information (indication) informs the user equipment 120 that it is currently operating in a physical cell address maintenance mode and that the user equipment 120 needs to execute the relevant mechanisms and procedures, such as performing synchronization with the upcoming satellite (e.g., the second satellite 142) at a specified time.

FIG. 7 is a flowchart illustrating a wireless communication method for satellite handover operation provided in an embodiment of the present application. This solution is applicable to both soft satellite handover and hard satellite handover scenarios. In a soft satellite handover, the first satellite 141 and the second satellite 142 simultaneously serve the first cell 150 for a period of time. The first satellite 141 stops serving the first cell 150 only after the user equipment 120 has connected to the second satellite 142. In a hard satellite handover, the second satellite 142 begins to serve the first cell 150 only after the first satellite 141 has completely stopped serving the first cell 150. Referring to FIG. 7, in some examples, the user equipment 120 starts a timer, and after the timer expires, the user equipment 120 begins synchronization with the second satellite 142. Specifically, in some examples, the user equipment 120 starts the timer after completing downlink or uplink synchronization with the first satellite 141, and upon expiration of the timer, begins synchronization with the second satellite 142. The timer is configured for scenarios in which the physical cell address is maintained. The base station 110 configures the timer for the user equipment 120 for use in such physical cell address maintenance scenarios (in the example shown in FIG. 7, the timer is configured via SIB19).

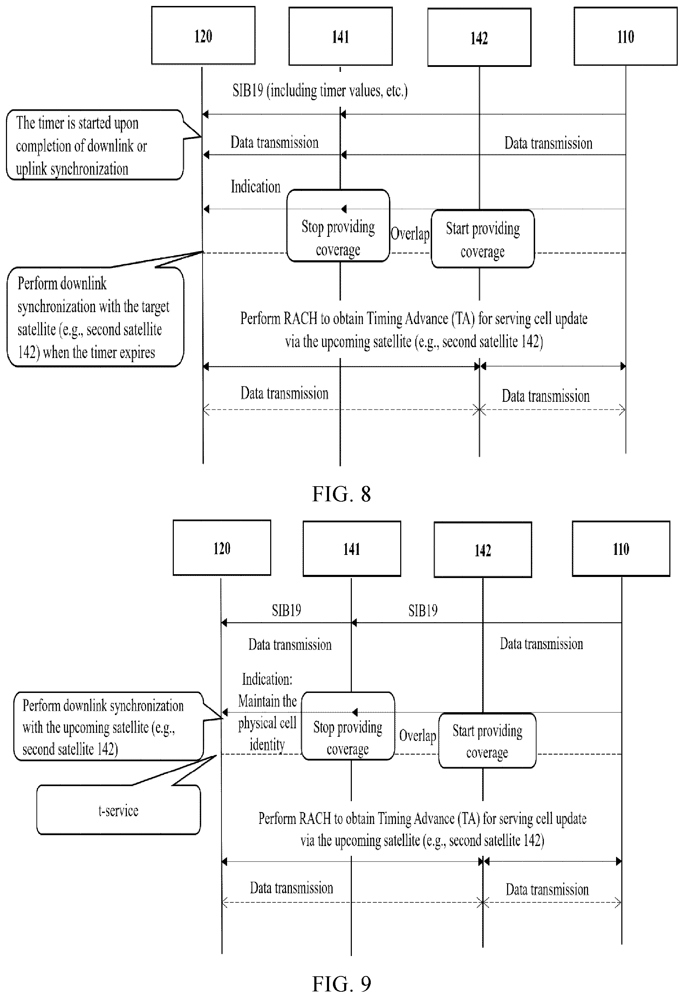

FIG. 8 is a flowchart illustrating a wireless communication method for satellite handover operation provided in an embodiment of the present application. Specifically, in some examples, the user equipment 120 starts the timer after completing the first downlink synchronization or the first uplink synchronization with the first satellite 141. Before the timer expires, it is not reset or restarted. Upon expiration of the timer, the user equipment 120 begins synchronization with the second satellite 142, and the timer is then reset or restarted. The reset/restart is triggered by uplink or downlink synchronization. In other examples, the user equipment 120 starts the timer after completing the first downlink or uplink synchronization with the first satellite 141. Before the timer expires, it is allowed to be reset or restarted. After being reset or restarted, the timer begins counting again. Upon expiration of the timer, the user equipment 120 begins synchronization with the second satellite 142. The reset/restart trigger is related to uplink or downlink synchronization. The timer is configured for scenarios in which the physical cell address is maintained. The base station 110 configures the timer for the user equipment 120 for use in such physical cell address maintenance scenarios (as shown in FIG. 8, the timer is configured via SIB19 in this example).

In this case, the basic steps are the same as those in some of the previously described embodiments. The difference lies in the following: after the timer is initially started, but before it expires, it may be reset or restarted. After being reset or restarted, the timer must count down again, and only after it expires can synchronization with the upcoming satellite (e.g., the second satellite 142) be initiated. The timer value after the reset/restart may be the same as the original value or may be reconfigured by the base station. The timer may be reset or restarted multiple times before it expires.

FIG. 9 is a flowchart illustrating a wireless communication method for satellite handover operation provided in an embodiment of the present application. Specifically, in some examples, the base station 110 informs the user equipment 120 of an exact time or an offset time relative to the service time t-service, and the user equipment 120 performs synchronization with the upcoming satellite (e.g., the second satellite 142) at the specified time. This solution is applicable to both soft satellite handover and hard satellite handover scenarios. In a soft satellite handover, the first satellite 141 and the second satellite 142 simultaneously serve the first cell 150 for a period of time. The first satellite 141 stops serving the first cell 150 only after the user equipment 120 has connected to the second satellite 142. In a hard satellite handover, the second satellite 142 begins to serve the first cell 150 only after the first satellite 141 has completely stopped serving the first cell 150.

Specifically, in some examples, the purpose of the information (the specific time) is to inform the user equipment 120 that it needs to execute the relevant mechanisms and procedures, such as performing synchronization with the second satellite 142 at the specified time. The first cell 150 is also a cell in an area covered by the second satellite 142 when the second satellite 142 is connected to the base station 110. In this way, satellite handover does not result in a change to the physical cell address, that is, the physical cell address is maintained, eliminating the need for a handover (HO) process. This saves time and signaling resources and improves communication efficiency.

FIG. 9 illustrates a flow in a soft satellite handover scenario where the base station informs the user equipment 120 of an offset time (t-offset) or a start time point (t-earlystart), instructing the user equipment to begin synchronization with the upcoming satellite (e.g., the second satellite 142) at the time (t-service) - (t-offset) or at t-earlystart. That is, in some embodiments of the present application, the second time is defined as the service time t-service minus an offset time or a specified start time point. The user equipment 120 receives the offset time or the start time point sent by the first satellite 141 and begins synchronization with the second satellite 142 at the time of t-service minus the offset time or at the specified start time point. The t-service indicates the time at which the first cell 150 stops providing service to the currently covered area. In some examples, the base station 110 sends t-offset or t-earlystart to the user equipment 120. The user equipment 120 then begins synchronization with the upcoming satellite (e.g., the second satellite 142) at the time (t-service) - (t-offset) or at t-earlystart.

Referring to FIG. 6 through FIG. 9, in some embodiments of the present application, the user equipment 120 acquires the ephemeris and/or the common timing advance parameter of the second satellite 142. In some embodiments of the present application, in a soft satellite handover scenario, the user equipment 120 distinguishes between the first satellite 141 and the second satellite 142. In some embodiments, multiple sets of transmission positions for synchronization signal block (SSB) patterns are predefined. In a soft satellite handover scenario, the user equipment 120 distinguishes between the first satellite 141 and the second satellite 142 based on the different positions from which they transmit the synchronization signal blocks. In some embodiments, during initial access in a soft satellite handover scenario, the user equipment detects the positions of multiple sets of SSB patterns to access the first cell 150. When the first satellite 141 is serving the first cell 150, it uses one of the predefined SSB pattern sets. If the scenario involves maintaining the physical cell address, the first satellite 141 switches to another set of SSB patterns when the second satellite 142 is serving the first cell 150 and transmits an indication message to the user equipment 120. After receiving this indication, when performing downlink synchronization with the second satellite 142, the user equipment 120 uses the other SSB pattern set based on the received indication. The usage order of the multiple SSB pattern sets may follow a default order, a preconfigured order, or an order configured by the base station 110 for the user equipment 120. In some embodiments of the present application, the user equipment 120 receives the information, the timer configured by the first satellite 141, the second time configured by the first satellite 141, or the usage order of the multiple SSB pattern sets via a dedicated message, a broadcast message, or a paging message.

Referring to FIG. 6 through FIG. 9, in some embodiments of the present application, the user equipment 120 acquires the ephemeris and/or the common timing advance parameter of the second satellite 142 via the broadcast message. In some embodiments of the present application, the broadcast information includes system information. In some embodiments, the system information includes the ephemeris and/or the common timing advance parameter for one or more upcoming satellites. In some embodiments, the system information includes SIB19. In some embodiments, the dedicated message includes RRC reconfiguration information, RRC messages, MAC CE messages, or PDCCH commands.

Specifically, in some examples, the information is a first indication regarding whether the physical cell address can be maintained. The first indication may be represented as an Information Element (IE).

For example, when the indication is enabled, the physical cell address can be maintained.

| | |
|---|---|
| UnchangedPCI | NUMERATED {enabled} |

For example, when the indication is set to {enabled, disabled}, the physical cell address maintenance can be applied.

| | |
|---|---|
| UnchangedPCI | NUMERATED {enabled, disabled} |

The first indication may be represented as a MAC Control Element (MAC CE). For example, referring to Table 6.2.1-1 in TS 38.321 (as shown in its original form) (Table 1), one of the reserved LCID values in the range of 35-46 can be used to indicate the purpose of this MAC CE.

### Table 6.2.1-1 Values of LCID for DL-SCH

**Table 1**

| Codepoint/Index | LCID values |
|---|---|
| 0 | CCCH |
| 1-32 | Identity of the logical channel of DCCH, DTCH and multicast MTCH |
| 33 | Extended logical channel ID field (two-octet eLCID field) |
| 34 | Extended logical channel ID field (one-octet eLCID field) |
| 35-46 | Reserved |
| 47 | Recommended bit rate |
| 48 | SP ZP CSI-RS Resource Set Activation/Deactivation |
| 49 | PUCCH spatial relation Activation/Deactivation |
| 50 | SP SRS Activation/Deactivation |
| 51 | SP CSI reporting on PUCCH Activation/Deactivation |
| 52 | TCI State Indication for UE-specific PDCCH |
| 53 | TCI States Activation/Deactivation for UE-specific PDSCH |
| 54 | Aperiodic CSI Trigger State Subselection |
| 55 | SP CSI-RS/CSI-IM Resource Set Activation/Deactivation |
| 56 | Duplication Activation/Deactivation |
| 57 | SCell Activation/Deactivation (four octets) |
| 58 | SCell Activation/Deactivation (one octet) |
| 59 | Long DRX Command |
| 60 | DRX Command |
| 61 | Timing Advance Command |
| 62 | UE Contention Resolution Identity |
| 63 | Padding |

Use the following MAC CE format, in which the L field is used to indicate whether physical cell address maintenance is allowed. One bit is selected for this indication, for example, a value of 1 represents "enabled" and a value of 0 represents "disabled," or vice versa.

**Table 2**

| | | | | | | | | |
|---|---|---|---|---|---|---|---|---|
| | | | | | | | | |
| | | | | | | | | |
| R | F | LCID | | | | | | Oct 1 |
| L | | | | | | | | Oct 2 |

Specifically, in some examples, the information is a second indication that instructs the user equipment 120 to use either soft satellite handover or hard satellite handover. The second indication may be configured using RRC or SIB, and the IE (Information Element) setting can be as follows:

For example, based on the type of physical cell address maintenance, the user equipment 120 is instructed to use either soft satellite handover or hard satellite handover.

| | |
|---|---|
| UnchangedPCIType | NUMERATED {hardsatelliteswitch, softsatelliteswitch} |

The second indication may be represented as a MAC Control Element (MAC CE). For example, referring to Table 6.2.1-1 in TS 38.321 (presented in its original form) (Table 1), one of the reserved LCID values in the range of 35-46 can be used to indicate the purpose of this MAC CE. The L field in the MAC CE format (as shown in Table 2 above) can be used to indicate the handover type. One bit can be selected for this indication-for instance, a value of 1 indicates hard satellite handover, and 0 indicates soft satellite handover, or vice versa. Alternatively, two bits in the form of a bitmap may be used. For example, the higher-order bit can represent hard satellite handover and the lower-order bit soft satellite handover, where 10 indicates hard satellite handover; or vice versa, where the higher-order bit represents soft satellite handover and the lower-order bit represents hard satellite handover, and 10 would then indicate soft satellite handover.

If using a PDCCH order:
The first indication: use 1 bit to indicate whether physical cell address maintenance is enabled.

The second indication: use 1 bit to indicate whether it is a hard or soft satellite handover. For example, 1 indicates hard satellite handover, 0 indicates soft satellite handover, or vice versa.

Alternatively, a 2-bit bitmap format may be used, where the first bit from the left represents hard satellite handover, and the second bit from the left represents soft satellite handover. In this case, 10 would indicate the use of hard satellite handover. Conversely, the first bit from the left could represent soft satellite handover, and the second bit from the left (or first bit from the right) could represent hard satellite handover, where 10 would then indicate the use of soft satellite handover.

Additionally, the first indication and second indication methods can be combined. For example, a PDCCH order can be used to indicate the enabling or changing of PCI, while RRC signaling can be used to indicate the handover type. Any combination of these methods is also possible.

If using a paging message:
One bit of the short message field within the paging message can be used to indicate physical cell address maintenance. The current definition of the short message allows for this. One or two bits among the reserved bits 5 to 8 can be used for this indication.

| Table 6.5.1-1: Short Messages | |
|---|---|
| Bit | Short Message |
| 1 | systemInfoModification |
| | If set to 1: indication of a BCCH modification other than SIB6, SIB7, SIB8 and posSIBs. |
| 2 | etwsAndCmasIndication |
| | If set to 1: indication of an ETWS primary notification and/or an ETWS secondary notification and/or a CMAS notification. |
| 3 | stopPagingMonitoring |
| | This bit can be used for only operation with shared spectrum channel access and if nrofPDCCH-MonitoringOccasionPerSSB-InPO is present. |
| | If set to 1: indication that the UE may stop monitoring PDCCH occasion(s) for paging in this Paging Occasion as specified in TS 38.304 [20], clause 7.1. |
| 4 | systemInfoModification-eDRX |
| | If set to 1: indication of a BCCH modification other than SIB6, SIB7, SIB8 and posSIBs. |
| | This indication applies only to UEs using IDLE eDRX cycle longer than the BCCH modification period. |
| 5-8 | Not used in this release of the specification, and shall be ignored by UE if received. |

First indication: Indicates whether physical cell address maintenance is allowed.

In Non-Terrestrial Network (NTN), one of bits 5 to 8 can be used to indicate physical cell address maintenance. If the bit is set to 1, it indicates that the current NTN is using physical cell address maintenance.

Second indication: Indicates whether the handover is a hard satellite handover or a soft satellite handover.

Two bits among bits 5 to 8 can be used in the form of a bitmap. In one example, the first bit from the left represents hard satellite handover, and the second bit from the left represents soft satellite handover. Thus, 10 indicates the use of hard satellite handover. Alternatively, the first bit from the left can represent soft satellite handover, and the second bit from the left (or first bit from the right) can represent hard satellite handover. Thus, 10 indicates the use of soft satellite handover.

For auxiliary information related to physical cell address maintenance, such as a timer, either broadcast information or dedicated information can be used. Broadcast information may be carried in a System Information Block (SIB), such as SIB19. Dedicated information may be provided through messages such as RRC Reconfiguration. The Information Element (IE) settings can be as follows:

| | |
|---|---|
| timer-UnchangedPCI | INTEGER (0...n} |

For auxiliary information related to physical cell address maintenance, such as the start time before t-service (t-earlystart), or a parameter indicating how long before t-service to begin (t-offset), either broadcast information or dedicated information can be used. Broadcast information may be conveyed using a System Information Block (SIB), such as SIB19, while dedicated information may be provided through messages such as RRC Reconfiguration. The Information Element (IE) setting can be as follows:
Indication of start time point:

| | |
|---|---|
| t-UnchangedPCIearlystart | INTEGER (0..,n} |

Indication of the parameter specifying how long before t-service to start (t-offset):

| | |
|---|---|
| t-UnchangedPCIoffset | INTEGER (0..,n} |

If the timer or specific time-related parameters are transmitted, then the explicit indication may be omitted (i.e., implicit indication can be used). Since these parameters are currently introduced solely for scenarios involving physical cell address maintenance, namely, the unchanged Physical Cell ID (PCI) scenario, the explicit indication may be omitted, and the absence of these parameters can serve as an implicit indication.

How the UE obtains the ephemeris and/or the common timing advance parameter of the new satellite:
The information can be included in a System Information Block (SIB), such as SIB19, where a newly introduced Information Element (IE) is specifically used to carry the ephemeris and/or the common timing advance parameter of the second satellite 142 (served by the same gNB).

Each satellite's system information (SI) includes only the ephemeris and/or common timing advance parameter of its corresponding second satellite 142.

In some cases, a satellite's SI may contain a list that includes the ephemeris and/or common timing advance parameters of multiple upcoming satellites. For example, the SI of a given satellite may include not only its own information but also that of satellites 2, 3, and 4.

The IE can be defined as follows:
Contains only the ephemeris and/or the common timing advance parameter of the second satellite 142.

### SIB19 information element:

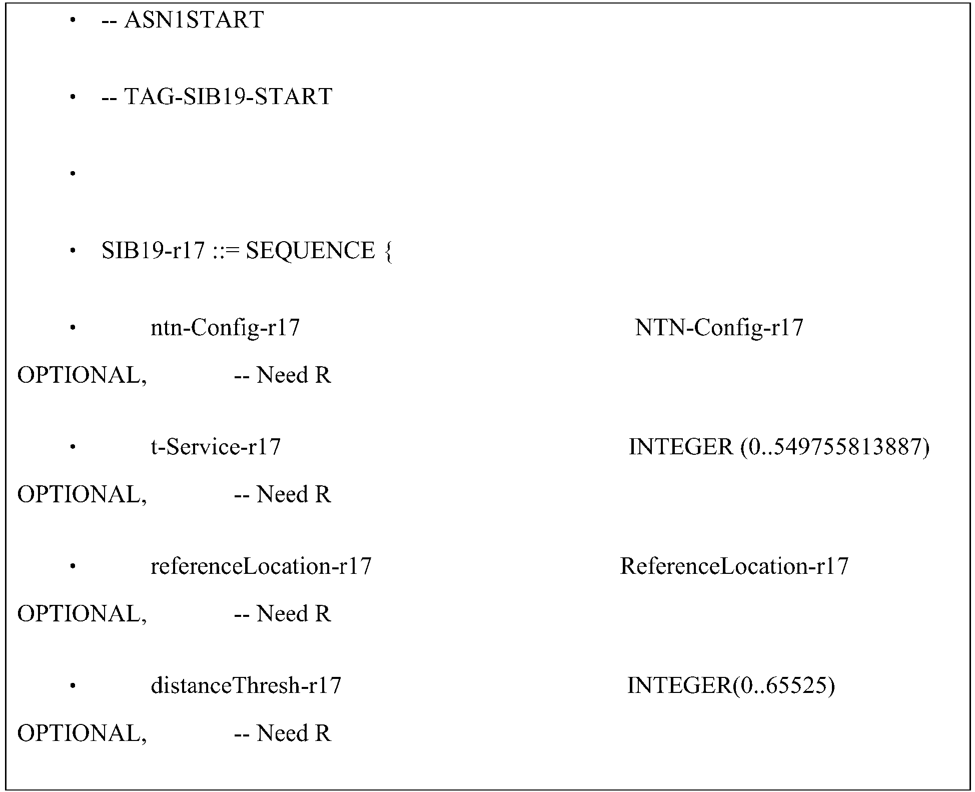

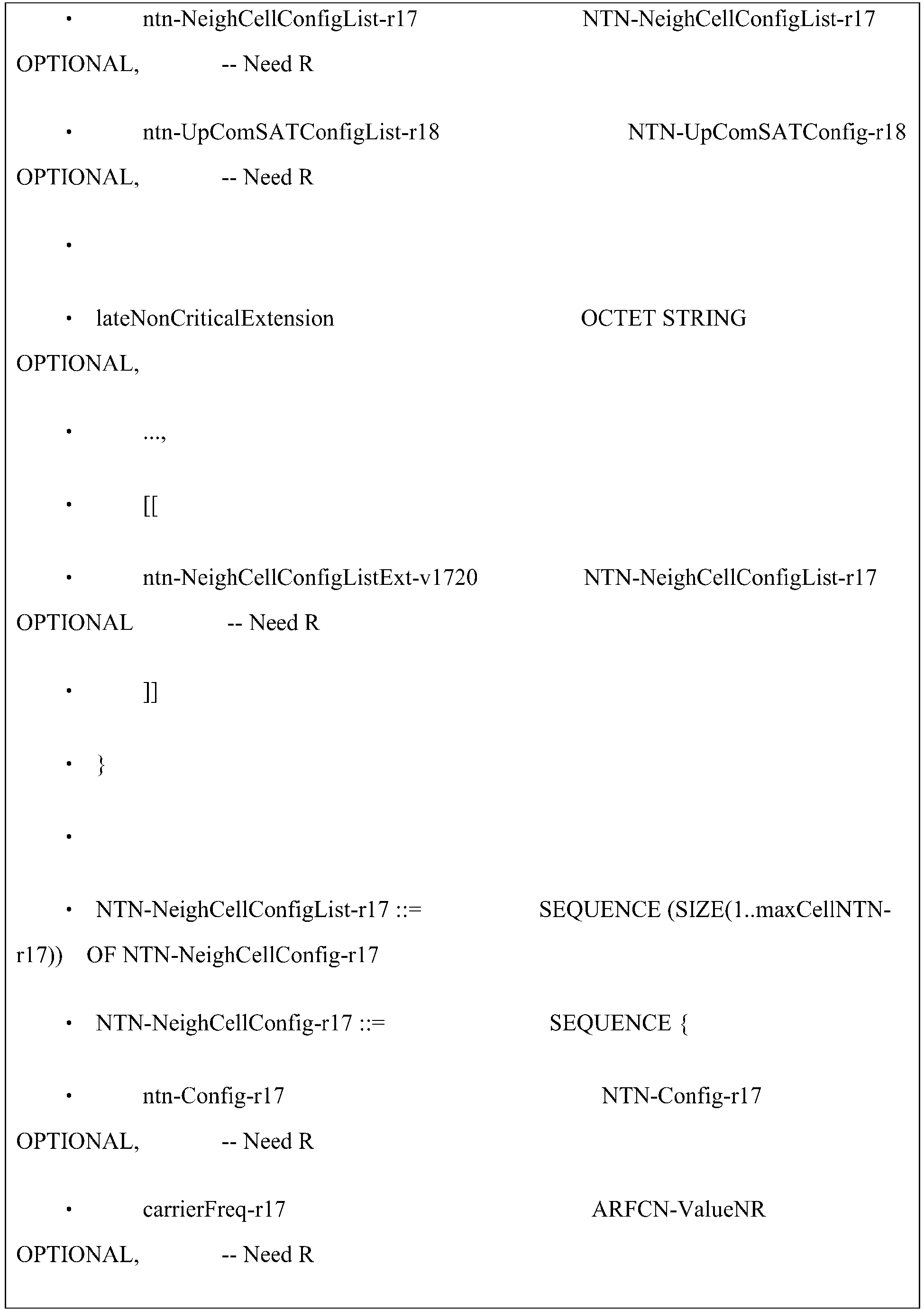

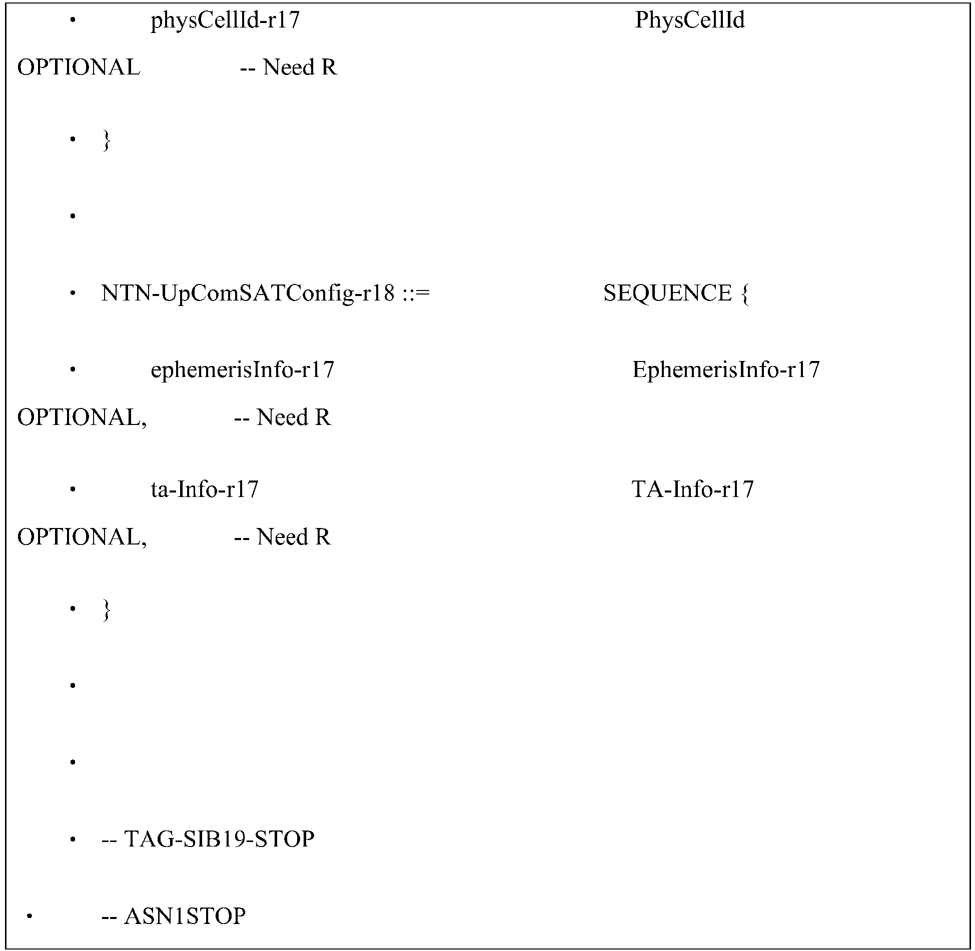

Include the ephemeris and/or the common timing advance parameters of multiple second satellites 142.

### SIB19 information element:

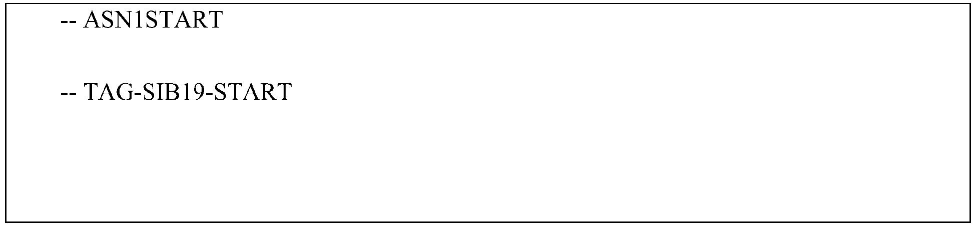

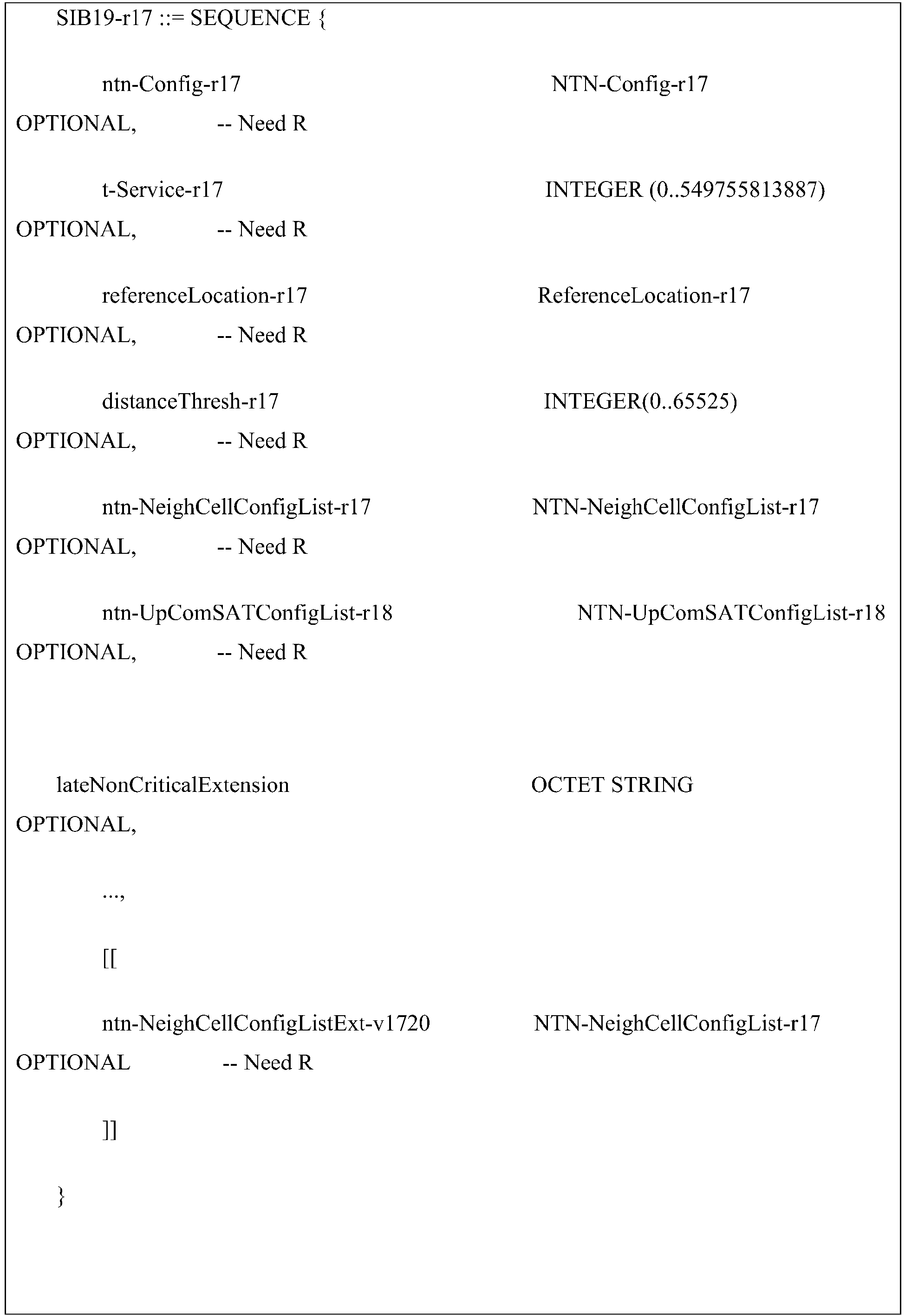

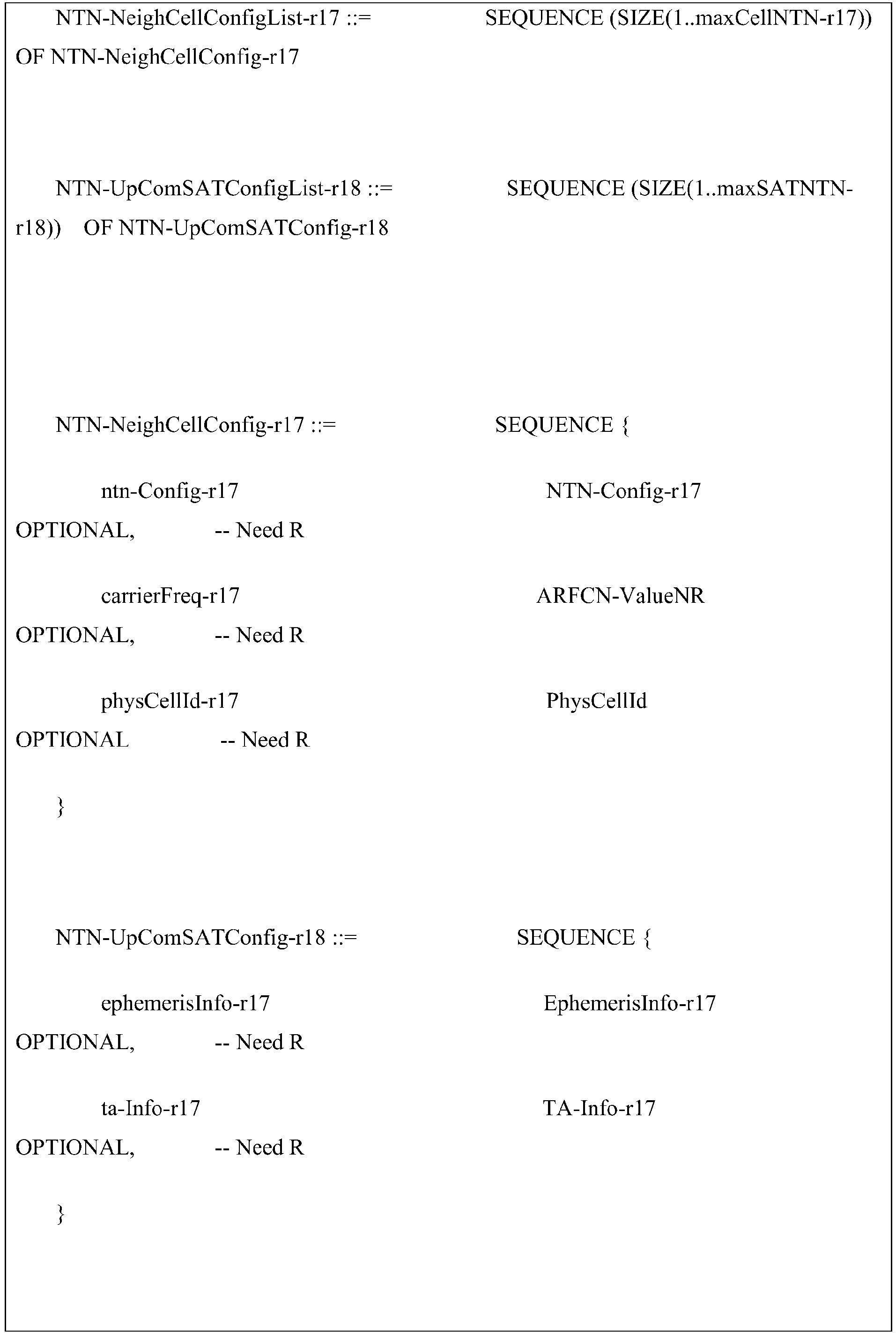

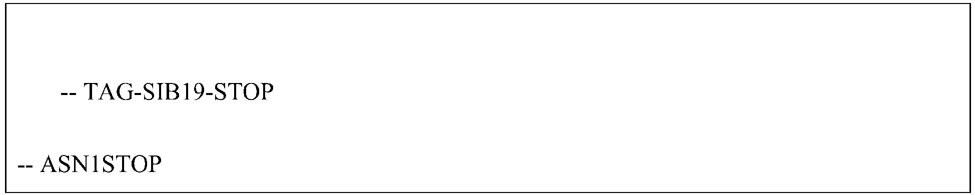

In a soft satellite handover scenario, how can the UE distinguish between the first satellite 141 and the second satellite 142? If the UE needs to distinguish whether it is communicating with the first satellite 141 or the second satellite 142, the two satellites, i.e., the first satellite 141 and the second satellite 142, can transmit SSBs (Synchronization Signal Blocks) from different positions. Section 4.1 of TS 38.213 provides the SSB patterns for NR. The main content is as follows (presented in its original form):

| |
|---|
| Case A - 15 kHz SCS: the first symbols of the candidate SS/PBCH blocks have indexes {2,8} + 14 · n. |
| For operation without shared spectrum channel access: |
| For carrier frequencies smaller than or equal to 3 GHz, n = 0,1. |
| For carrier frequencies within FR1 larger than 3 GHz, n = 0,1,2,3. |
| For operation with shared spectrum channel access, as described in [15, TS 37.213], n = 0, 1, 2, 3, 4. |
| Case B - 30 kHz SCS: the first symbols of the candidate SS/PBCH blocks have indexes {4,8,16,20} + 28 · n. |
| For carrier frequencies smaller than or equal to 3 GHz, n = 0. For carrier frequencies within FR1 larger than 3 GHz, n = 0,1. |
| Case C - 30 kHz SCS: the first symbols of the candidate SS/PBCH blocks have indexes {2,8} + 14 · n. |
| For operation without shared spectrum channel access: |
| For paired spectrum operation: |
| For carrier frequencies smaller than or equal to 3 GHz, n = 0,1. |
| For carrier frequencies within FR1 larger than 3 GHz, n = 0,1,2,3. |
| For unpaired spectrum operation: |
| For carrier frequencies smaller than 1.88 GHz, n = 0,1. |
| For carrier frequencies within FR1 equal to or larger than 1.88 GHz, n = 0,1,2,3. |
| For operation with shared spectrum channel access, n = 0, 1, 2, 3, 4, 5, 6, 7, 8, 9. |
| Case D - 120 kHz SCS: the first symbols of the candidate SS/PBCH blocks have indexes {4,8,16,20} + 28 · n. |
| For carrier frequencies within FR2, n = 0, 1, 2, 3, 5, 6, 7, 8, 10, 11, 12, 13, 15, 16, 17, 18. |
| Case E - 240 kHz SCS: the first symbols of the candidate SS/PBCH blocks have indexes {8,12,16,20,32,36,40,44} + 56 · n. |
| For carrier frequencies within FR2-1, n = 0, 1, 2, 3, 5, 6, 7, 8. |
| Case F - 480 kHz SCS: the first symbols of the candidate SS/PBCH blocks have indexes {2,9} + 14 · n. |
| For carrier frequencies within FR2-2, n = |
| 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31. |
| Case G - 960 kHz SCS: the first symbols of the candidate SS/PBCH blocks have indexes {2,9} + 14 · n. |
| For carrier frequencies within FR2-2, n = |
| 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31. |

Design two or more sets of SSB patterns for the NTN scenario. In addition to the existing SSB patterns (as referenced above), candidate patterns can be designed, for example, for a 15 kHz SCS, using the pattern formula {3, 9} + 14n. In this case, the UE can follow the process below to ensure that it is accessing the second satellite 142:
Step 1: During initial access, the UE detects SSB positions corresponding to both (or all) SSB patterns in order to access the cell.
Step 2: If the scenario involves physical cell address maintenance, the base station will use a different pattern when the next satellite serves the same area. Therefore, the base station needs to indicate this information to the UE. The base station can use either of the following two indication methods:
   Optional Scheme 1: The base station indicates to the UE that the physical cell address maintenance mechanism is currently being used, and further indicates that it is using the soft satellite handover version of this mechanism (this indication corresponds to the explicit or implicit indication mentioned in some of the embodiments above). In this scheme, the base station does not need to directly inform the UE which SSB pattern will be used by the next satellite.
   Optional Scheme 2: The base station directly indicates to the UE which SSB pattern will be used by the next satellite. This can be done using an index or bitmap to associate with the available patterns. For example, if four SSB patterns are designed, a 2-bit index can be used to represent these patterns. Alternatively, a bitmap can be used-for instance, if the first SSB pattern is to be used, the bitmap "1000" can be transmitted as the indicator. The base station provides this indication during the serving period of the first satellite 141 to inform the UE which SSB pattern will be used by the next satellite. For example, if the second pattern is to be used next, the base station may send the 2-bit index "01" or a 4-bit bitmap "0100". In this case, the base station does not need to indicate that the physical cell address maintenance mechanism is being used (as described in Optional Scheme 1). This indication from the base station to the UE can be delivered through dedicated signaling, such as RRC, MAC CE, or a PDCCH order. It may also be delivered via broadcast signaling, such as SIB19.
Step 3: After receiving the indication information as described in Optional Scheme 1 or Optional Scheme 2 in Step 2, the UE will use a different SSB pattern for downlink (DL) synchronization with the second satellite 142. Once the UE detects the new satellite on the alternative SSB pattern and completes access, it considers itself connected to the new satellite.

For Step 2, Optional Scheme 1: If there are only two SSB patterns, then upon receiving the indication, the UE knows that the next satellite will use the other pattern and will detect the SSB on that pattern.

If there are multiple SSB patterns, a default usage order for the patterns can be preconfigured. For example, if there are four SSB patterns with a usage sequence of {0, 1, 3, 2}, and the UE initially accessed the cell using pattern 1, then upon receiving the indication, the UE knows that the next satellite will use pattern 3 and will detect SSB at the locations corresponding to pattern 3.

The pattern usage order can be preconfigured, meaning that whenever this mechanism is used, the usage order is fixed and known.

Or, configured by the base station, delivered via dedicated signaling, such as RRC, MAC CE, or PDCCH order, or via broadcast signaling, such as SIB19.

For Step 2, Optional Scheme 2: after receiving the indication, the UE will detect the SSB at the positions specified by the indicated pattern in order to access the new satellite.

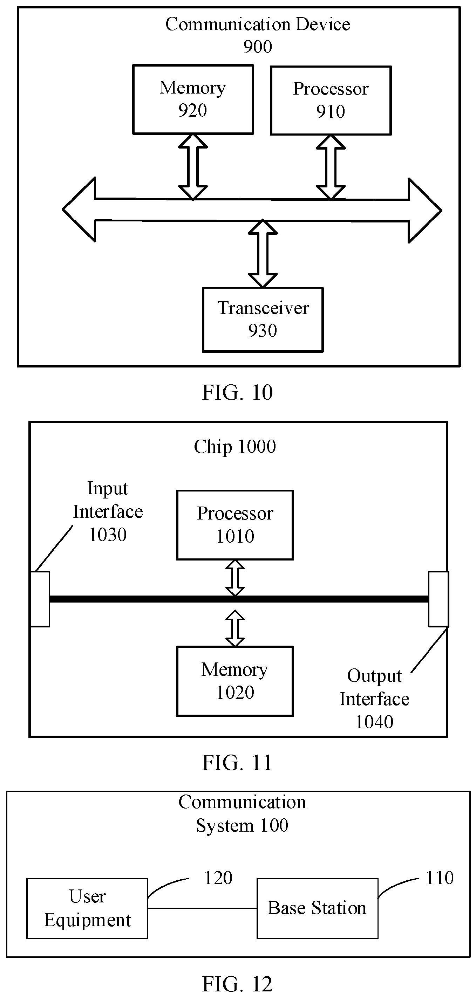

FIG. 10 is a schematic structural diagram of a communication device 900 provided in an embodiment of the present application. The communication device may be a user equipment, a base station, a first satellite, or a second satellite. As shown in FIG. 10, the communication device 900 includes a processor 910, which can invoke and run a computer program from memory to implement the methods described in the embodiments of the present application.

Optionally, as shown in FIG. 10, the communication device 900 may further include a memory 920. The processor 910 can invoke and run a computer program stored in the memory 920 to implement the methods described in the embodiments of the present application.

The memory 920 may be a separate component independent of the processor 910, or it may be integrated within the processor 910.

Optionally, as shown in FIG. 10, the communication device 900 may further include a transceiver 930, which can be controlled by the processor 910 to communicate with other devices. Specifically, it may send information or data to other devices, or receive information or data from other devices.

The transceiver 930 may include both a transmitter and a receiver. The transceiver 930 may further include one or more antennas.

Optionally, the communication device 900 may specifically be a base station as described in the embodiments of the present application, and it can implement the corresponding procedures performed by the base station in the various methods of the present application. For brevity, such details are not repeated here.

Optionally, the communication device 900 may specifically be a mobile user equipment/user equipment, as described in the embodiments of the present application, and it can implement the corresponding procedures performed by the mobile user equipment/user equipment in the various methods of the present application. For brevity, such details are not repeated here.

FIG. 11 is a schematic structural diagram of a chip 1000 provided in an embodiment of the present application. As shown in FIG. 11, the chip 1000 includes a processor 1010, which can invoke and run a computer program from memory to implement the methods described in the embodiments of the present application.

Optionally, as shown in FIG. 11, the chip 1000 may further include a memory 1020. The processor 1010 can invoke and run a computer program stored in the memory 1020 to implement the methods described in the embodiments of the present application.

The memory 1020 may be a separate component independent of the processor 1010, or it may be integrated within the processor 1010.

Optionally, the chip 1000 may also include an input interface 1030, which can be controlled by the processor 1010 to communicate with other devices or chips. Specifically, it can be used to receive information or data sent from other devices or chips.

Optionally, the chip 1000 may further include an output interface 1040. The processor 1010 can control the output interface 1040 to communicate with other devices or chips, specifically to output information or data to those devices or chips.

Optionally, the chip may be applied to a base station as described in the embodiments of the present application, and the chip can implement the corresponding procedures performed by the base station in various methods of the present application. For brevity, such details are not repeated here.

Optionally, the chip may be applied to a mobile user equipment/user equipment, as described in the embodiments of the present application, and the chip can implement the corresponding procedures performed by the mobile user equipment/user equipment in various methods of the present application. For brevity, such details are not repeated here.

It should be understood that the chip mentioned in the embodiments of the present application may also be referred to as a System-on-Chip (SoC), system chip, chip system, or on-chip system, among other names.

FIG. 12 is a schematic block diagram of a communication system 100 provided in an embodiment of the present application. As shown in FIG. 12, the communication system 100 includes a user equipment 120 and a base station 110.

The user equipment 120 may be used to implement the corresponding functions performed by the user equipment in the above-described methods, and the base station 110 may be used to implement the corresponding functions performed by the base station in the above-described methods. For brevity, such details are not repeated here.

It should be understood that the processor in the embodiments of the present application may be an integrated circuit chip with signal processing capabilities. During implementation, the steps of the above-mentioned method embodiments can be performed by integrated logic circuits within the processor or by instructions in software form. The processor may be a general-purpose processor, a Digital Signal Processor (DSP), an Application Specific Integrated Circuit (ASIC), a Field Programmable Gate Array (FPGA), or other programmable logic devices, discrete gate or transistor logic devices, or discrete hardware components capable of implementing or executing the methods, steps, and logic diagrams disclosed in the embodiments of the present application. A general-purpose processor may be a microprocessor or any other conventional processor. The steps of the methods disclosed in the embodiments of the present application may be directly executed by hardware decoding within the processor, or by a combination of hardware and software modules within the decoding processor. The software modules may reside in storage media such as random access memory (RAM), flash memory, read-only memory (ROM), programmable read-only memory (PROM), electrically erasable programmable read-only memory (EEPROM), registers, or other well-known storage media in the field. The storage medium is located in the memory, and the processor reads information from the memory and, in combination with its hardware, completes the above method steps.

It should be understood that the memory in the embodiments of the present application may be volatile memory, non-volatile memory, or a combination of both. The non-volatile memory may include Read-Only Memory (ROM), Programmable ROM (PROM), Erasable PROM (EPROM), Electrically Erasable PROM (EEPROM), or flash memory. The volatile memory may include Random Access Memory (RAM), which is used as external high-speed cache. By way of example and not limitation, many forms of RAM may be used, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DR RAM). It should be noted that the memory described herein for the systems and methods is intended to include, but is not limited to, these and any other suitable types of memory.

It should be understood that the above-mentioned memory types are provided by way of example rather than limitation. For instance, the memory in the embodiments of the present application may also be Static Random Access Memory (SRAM), Dynamic Random Access Memory (DRAM), Synchronous Dynamic Random Access Memory (SDRAM), Double Data Rate SDRAM (DDR SDRAM), Enhanced SDRAM (ESDRAM), Synchlink DRAM (SLDRAM), and Direct Rambus RAM (DR RAM), among others. In other words, the memory in the embodiments of the present application is intended to include, but is not limited to, these and any other suitable types of memory.

The embodiments of the present application further provide a computer-readable storage medium for storing a computer program.

Optionally, the computer-readable storage medium may be applied to a base station in the embodiments of the present application, and the computer program enables the computer to execute the corresponding procedures implemented by the base station in the various methods of the present application. For the sake of brevity, such details are not repeated here.

Optionally, the computer-readable storage medium may be applied to a mobile user equipment/user equipment device in the embodiments of the present application, and the computer program enables the computer to execute the corresponding procedures implemented by the mobile user equipment/user equipment device in the various methods of the present application. For the sake of brevity, such details are not repeated here.

The present application further provides a computer program product, which includes computer program instructions.

Optionally, the computer program product can be applied to a base station as described in the embodiments of the present application, and the computer program instructions enable the computer to execute the corresponding procedures implemented by the base station in the various methods of the present application. For brevity, such details are not repeated herein.

Optionally, the computer program product can be applied to a mobile user equipment/user equipment device as described in the embodiments of the present application, and the computer program instructions enable the computer to execute the corresponding procedures implemented by the mobile user equipment/user equipment device in the various methods of the present application. For brevity, such details are not repeated herein.

The present application further provides a computer program.

Optionally, the computer program can be applied to a base station as described in the embodiments of the present application. When executed on a computer, the computer program enables the computer to perform the corresponding procedures implemented by the base station in the various methods of the present application. For brevity, such details are not repeated herein.

Optionally, the computer program can be applied to a mobile user equipment/user equipment device as described in the embodiments of the present application. When executed on a computer, the computer program enables the computer to perform the corresponding procedures implemented by the mobile user equipment/user equipment device in the various methods of the present application. For brevity, such details are not repeated herein.

One of ordinary skill in the art will recognize that the individual units and algorithm steps described in connection with the embodiments disclosed herein can be implemented either in electronic hardware, or in a combination of computer software and electronic hardware. Whether these functions are executed in hardware or software depends on the specific application and design constraints of the technical solution. A person skilled in the art may use different methods to implement the described functions for each particular application, but such implementations should not be considered as going beyond the scope of the present application.

It will also be readily understood by those skilled in the art that, for the sake of convenience and clarity, the specific working processes of the aforementioned systems, devices, and units can be referenced from the corresponding procedures described in the foregoing method embodiments, and are not repeated herein.

In the various embodiments provided in the present application, it should be understood that the disclosed systems, devices, and methods can be implemented in other ways. For example, the above-described device embodiments are merely illustrative. The division of units is merely a logical division of functions; in actual implementation, other division methods may be adopted. For instance, multiple units or components may be combined or integrated into another system, or some features may be omitted or not performed. Additionally, the coupling, direct coupling, or communication connections shown or discussed between components may be indirect coupling or communication connections via certain interfaces, devices, or units, and such connections may be electrical, mechanical, or in other forms.

The units described as separate components may or may not be physically separate; the components shown as units may or may not be physical entities-that is, they can be located in one place or distributed across multiple network units. Some or all of these units may be selected as needed to achieve the objectives of the embodiments of the present application.

Furthermore, the functional units in the various embodiments of the present application may be integrated into a single processing unit, may exist separately as individual physical entities, or two or more units may be integrated into one unit.

If the described functions are implemented in the form of software functional units and sold or used as independent products, they can be stored in a computer-readable storage medium. Based on this understanding, the technical solutions of the present application, essentially or at least in part contributing to the prior art, can be embodied in the form of a software product. This computer software product is stored in a storage medium and includes a set of instructions to enable a computer device (which may be a personal computer, server, base station, etc.) to execute all or part of the steps of the methods described in the various embodiments of the present application. The aforementioned storage medium may include, but is not limited to, USB flash drives, external hard disks, read-only memory (ROM), random access memory (RAM), magnetic disks, optical discs, or other media capable of storing program code.

The above descriptions are merely specific embodiments of the present application and are not intended to limit the scope of protection of the present application. Any modifications or substitutions that can be readily conceived by those skilled in the art within the scope of the disclosed technology shall fall within the scope of protection of the present application. Therefore, the scope of protection of the present application shall be defined by the claims.

## Claims

1. A wireless communication method for a satellite handover operation, comprising:
receiving, by a user equipment, in a first cell and at a first time, information transmitted by a first satellite, wherein the first cell is a cell in an area covered by the first satellite when the first satellite is connected to a base station, the first cell comprises a physical cell address, and the first time is a period during which the user equipment is connected to the first satellite;
based on the information, synchronizing, by the user equipment, with a second satellite in the first cell and at a second time, wherein the first cell is also a cell in an area covered by the second satellite when the second satellite is connected to the base station.

2. The method according to claim 1, wherein the information notifies the user equipment that, during a process in which the user equipment switches from being connected to the first satellite to being connected to the second satellite, the physical cell address is maintained.

3. The method according to claim 1 or 2, wherein synchronizing, by the user equipment, with the second satellite at the second time comprises: starting, by the user equipment, to synchronize with the second satellite immediately after receiving the information from the first satellite.

4. The method according to any one of claims 1 to 3, wherein synchronizing, by the user equipment, with the second satellite at the second time comprises: starting, by the user equipment, a timer, and upon expiration of the timer, the user equipment begins to synchronize with the second satellite.

5. The method according to any one of claims 1 to 4, wherein synchronizing, by the user equipment, with the second satellite at the second time comprises: starting, by the user equipment, the timer after completing downlink synchronization or uplink synchronization with the first satellite, and upon expiration of the timer, the user equipment begins to synchronize with the second satellite.

6. The method according to claim 5, wherein the user equipment starts the timer after completing a first downlink synchronization or a first uplink synchronization with the first satellite, and the timer is not reset or restarted before the timer expires; upon expiration of the timer, the user equipment begins to perform synchronization with the second satellite, and the timer is reset or restarted.

7. The method according to claim 5, wherein the user equipment starts the timer after completing a first downlink synchronization or a first uplink synchronization with the first satellite, and before the timer expires, the timer is allowed to be reset or restarted, and upon being reset or restarted, the timer restarts timing; upon expiration of the timer, the user equipment begins to perform synchronization with the second satellite, trigger for resetting or restarting is related to uplink or downlink synchronization.

8. The method according to any one of claims 1 to 7, wherein the timer is a timer used for a scenario in which the physical cell address is maintained.

9. The method according to any one of claims 1 to 8, wherein the second time is a time obtained by subtracting an offset time or a start time point from a service time (t-service), and the user equipment receives the offset time or the start time point transmitted by the first satellite, and the user equipment begins to synchronize with the second satellite at time of the t-service minus the offset time or the start time point, wherein the t-service indicates a time information of when the first cell stops providing service to a currently covered area.

10. The method according to any one of claims 1 to 9, wherein the information notifies the user equipment whether to use the maintained physical cell address and/or notifies the user equipment to perform soft satellite handover or hard satellite handover, wherein the soft satellite handover refers to a handover in which the first satellite and the second satellite simultaneously serve the first cell for a period of time, and the first satellite stops serving the first cell after the user equipment is connected to the second satellite; and the hard satellite handover refers to a handover in which the second satellite starts serving the first cell after the first satellite has completely stopped serving the first cell.

11. The method according to any one of claims 1 to 10, further comprising:
acquiring, by the user equipment, an ephemeris and/or a common timing advance parameter of the second satellite.

12. The method according to any one of claims 1 to 11, further comprising:
in a soft satellite handover scenario, distinguishing, by the user equipment, between the first satellite and the second satellite.

13. The method according to claim 12, further comprising:
predefining multiple sets of transmission positions for synchronization signal block patterns, wherein in the soft satellite handover scenario, the user equipment distinguishes between the first satellite and the second satellite based on transmission of synchronization signal blocks at different positions by the first satellite and the second satellite.

14. The method according to claim 13, wherein in the soft satellite handover scenario, the user equipment distinguishes between the first satellite and the second satellite based on the transmission of the synchronization signal blocks at different positions by the first satellite and the second satellite, comprising:
during initial access, detecting, by the user equipment, positions of multiple sets of synchronization signal block patterns to access the first cell, wherein when the first satellite serves the first cell, one set of the synchronization signal block patterns is used;
in a scenario where the physical cell address is maintained, when the second satellite serves the first cell, the first satellite uses another set of the synchronization signal block patterns and transmits an indication information to the user equipment;
after receiving the indication information, the user equipment, when performing downlink synchronization with the second satellite, uses the other set of the synchronization signal block patterns based on the indication information.

15. The method according to claim 14, wherein a usage order of the multiple sets of the synchronization signal block patterns is based on a default order, or is preconfigured, or configured by the base station for the user equipment.

16. The method according to any one of claims 1 to 15, wherein the user equipment receives the information, the timer configured by the first satellite, the second time configured by the first satellite, or the usage order of the multiple sets of synchronization signal block patterns via a dedicated message, a broadcast message, or a paging message.

17. The method according to claim 16, wherein the user equipment acquires an ephemeris and/or a common timing advance parameter of the second satellite via the broadcast message.

18. The method according to claim 17, wherein the broadcast information comprises a system information.

19. The method according to claim 18, wherein the system information comprises an ephemeris and/or a common timing advance parameter for one or more upcoming satellites.

20. The method according to claim 18 or 19, wherein the system information comprises system information block type 19 (SIB19).

21. The method according to claim 16, wherein the dedicated message comprises a radio resource control (RRC) reconfiguration information, an RRC message, a medium access control (MAC) control element (CE) message, or a physical downlink control channel (PDCCH) command.

22. A wireless communication method for a satellite handover operation, comprising:
transmitting, by a base station, an information to a user equipment via a first satellite in a first cell and at a first time, wherein the first cell is a cell in an area covered by the first satellite when the first satellite is connected to the base station, the first cell comprises a physical cell address, and the first time is a period during which the user equipment is connected to the first satellite;
receiving, by the base station, a synchronization information, wherein the synchronization information notifies the base station that the user equipment, based on the information, synchronizes with a second satellite in the first cell and at a second time, the first cell is also a cell in an area covered by the second satellite when the second satellite is connected to the base station.

23. The method according to claim 22, further comprising:
predefining multiple sets of transmission positions for synchronization signal block patterns.

24. The method according to claim 23, further comprising:
receiving, by the base station, a notification from the user equipment that, in a soft satellite handover scenario, the user equipment distinguishes between the first satellite and the second satellite based on transmission of synchronization signal blocks at different positions by the first satellite and the second satellite.

25. The method according to claim 23, wherein a usage order of the multiple sets of synchronization signal block patterns is based on a default order, or is preconfigured, or configured by the base station for the user equipment.

26. A wireless communication method for a satellite handover operation, comprising:
transmitting, by a first satellite, an information to a user equipment in a first cell and at a first time, wherein the first cell is a cell in an area covered by the first satellite when the first satellite is connected to a base station, the first cell comprises a physical cell address, and the first time is a period during which the user equipment is connected to the first satellite;
wherein the information is used to enable the user equipment, based on the information, to synchronize with a second satellite in the first cell and at a second time, the first cell is also a cell in an area covered by the second satellite when the second satellite is connected to the base station.

27. A user equipment, comprising:
a processor and a memory, wherein the memory is configured to store a computer program, and the processor is configured to invoke and run the computer program stored in the memory to perform the method according to any one of claims 1 to 21.

28. A base station, comprising:
a processor and a memory, wherein the memory is configured to store a computer program, and the processor is configured to invoke and run the computer program stored in the memory to perform the method according to any one of claims 22 to 25.

29. A first satellite, comprising:
a processor and a memory, wherein the memory is configured to store a computer program, and the processor is configured to invoke and run the computer program stored in the memory to perform the method according to claim 26.
